Europäisches Patentamt

European Patent Office

Office européen des brevets

(19)

(11) Numéro de publication : **0 298 841 B1**

(12)

# FASCICULE DE BREVET EUROPEEN

(45) Date de publication du fascicule du brevet :
27.11.91 Bulletin 91/48

(51) Int. Cl.⁵ : **B23K 9/02**, F22B 27/00

(21) Numéro de dépôt : 88401696.5

(22) Date de dépôt : 30.06.88

(54) **Dispositif de soudage à l'intérieur d'un tube de petit diamètre.**

(30) Priorité : 10.07.87 FR 8709872

(43) Date de publication de la demande :
11.01.89 Bulletin 89/02

(45) Mention de la délivrance du brevet :
27.11.91 Bulletin 91/48

(84) Etats contractants désignés :
BE CH DE ES GB LI SE

(56) Documents cités :
EP-A- 0 090 725
FR-A- 2 211 721
FR-A- 2 585 500
FR-A- 2 598 210

(73) Titulaire : **FRAMATOME**
**Tour Fiat 1, Place de la Coupole**
**F-92400 Courbevoie (FR)**

(72) Inventeur : **Gaudin, Jean-Paul**
**3 rue Jacques Brel**
**F-69680 Chassieu (FR)**
Inventeur : **Peyrot, Jean-Pierre**
**8 Domaine de Bel Abord**
**F-81380 Chilly-Mazarin (FR)**

(74) Mandataire : **Bouget, Lucien et al**
**Cabinet Lavoix 2, Place d'Estienne d'Orves**
**F-75441 Paris Cédex 09 (FR)**

# Description

L'invention concerne un dispositif de soudage rotatif à l'intérieur d'un tube de petit diamètre, en particulier à l'intérieur d'un tube de générateur de vapeur serti à l'une de ses extrémités dans une plaque tubulaire de forte épaisseur.

Les générateurs de vapeur des réacteurs nucléaires à eau sous pression comportent un faisceau de tubes dont les extrémités sont serties dans une plaque tubulaire dont l'épaisseur est généralement supérieure à 500 mm. Les tubes du faisceau qui sont en alliage de nickel ont un diamètre intérieur un peu inférieur à 20 mm.

Après un certain temps de fonctionnement du générateur de vapeur, certains tubes du faisceau peuvent présenter des détériorations plus ou moins importantes et en particulier des fissures traversant leur paroi. Dans ce cas, le tube n'assure plus une séparation parfaite entre l'eau primaire sous pression en contact avec sa paroi interne et l'eau d'alimentation du générateur de vapeur en contact avec sa surface externe. Il est donc nécessaire soit de boucher le tube pour le mettre hors service, soit d'effectuer une réparation de la paroi du tube dans sa zone fissurée.

Les tubes d'un générateur de vapeur peuvent être réparés par manchonnage, cette opération consistant à introduire un manchon dans le tube et à assurer sa fixation sur la paroi intérieure du tube, de part et d'autre de la zone fissurée.

La fixation du manchon, généralement par expansion diamétrale et par dudgeonnage, doit être complétée par un soudage des extrémités du manchon sur le tube, sur toute leur périphérie, de façon à assurer une jonction parfaitement étanche entre le tube et le manchon. Cette opération peut être réalisée en utilisant un dispositif de soudage TIG rotatif comportant une tête de soudage qui est introduite dans le tube au niveau des extrémités du manchon dont on a réalisé préalablement la fixation dans le tube. La tête de soudage comporte un support sur lequel sont fixées une pièce permettant le guidage de la tête dans le tube et une électrode ayant une disposition radiale par rapport à la tête et au tube dans lequel la tête est introduite.

La tête de soudage est montée rotative autour de son axe à l'extrémité d'une canne de soudage qui peut être réalisée sous forme entièrement rigide ou au contraire constituée par des tronçons souples et des tronçons rigides. La canne de soudage comporte des conduits d'alimentation de la tête de soudage en gaz inerte de protection et en eau de refroidissement, un câble d'alimentation de l'électrode en courant de soudage ainsi que des moyens pour la mise en rotation de la tête de soudage et de son électrode autour de l'axe du tube.

Dans le cas du soudage rotatif à l'intérieur de tubes de générateur de vapeur d'un réacteur nucléaire à eau sous pression, la canne de soudage doit être introduite dans chacun des tubes dont on effectue le manchonnage, par la face d'entrée de la plaque tubulaire, à l'intérieur de la boîte à eau du générateur de vapeur.

Cette boîte à eau de forme hémisphérique comporte deux compartiments qui sont accessibles chacun par un trou d'homme.

Le volume intérieur de la boîte à eau qui vient en contact avec l'eau primaire présente une certaine radio-activité, si bien que les interventions à l'intérieur de la boîte à eau doivent avoir une durée très faible ou être commandées depuis l'extérieur de la boîte à eau.

D'autre part, l'introduction d'un outillage rigide d'une certaine longueur dans les tubes du faisceau n'est possible que dans la partie centrale de ce faisceau, l'espace disponible sous la plaque tubulaire, en raison de la forme hémisphérique de la boîte à eau devenant rapidement trop faible, pour les tubes situés vers la périphérie du faisceau, pour qu'on puisse assurer la mise en position verticale d'introduction de l'outillage.

On a donc proposé des procédés d'intervention adaptés au cas des tubes périphériques du faisceau et des dispositifs correspondants permettant d'effectuer les différentes opérations mises en jeu lors du manchonnage.

Cependant, on n'a pas jusqu'ici proposé de canne de soudage TIG rotatif adaptée au cas des tubes périphériques d'un générateur de vapeur.

La plupart des dispositifs proposés pour des interventions dans les tubes d'un générateur de vapeur et en particulier dans les tubes périphériques comportent des parties rigides et des parties flexibles reliées entre elles constituant un outillage mobile qui peut être déplacé dans un conduit de guidage assurant la jonction entre l'extérieur de la boite à eau et l'entrée du tube du générateur de vapeur dans lequel a lieu l'intervention. Grâce à de tels outillages mobiles et flexibles, il est possible d'effectuer des interventions ou des contrôles dans des tubes de générateur de vapeur, à une hauteur quelconque à l'intérieur de ces tubes.

Il n'a pas été possible jusqu'ici de concevoir une canne de soudage présentant les mêmes avantages que les dispositifs mentionnés ci-dessus et permettant une intervention, pour le soudage d'un manchon, à une hauteur quelconque à l'intérieur d'un tube de générateur de vapeur.

En effet, la canne de soudage doit assurer une mise en place très précise de la tête de soudage dans le tube et un guidage parfait en rotation de cette tête lors du soudage. Ces conditions sont difficilement réalisables avec un ensemble comportant des parties souples et des parties rigides et entraîné en rotation par un moyen moteur situé à l'extérieur de la boîte à eau.

On connaît par le FR-A-2.585.500 un dispositif de soudage télécommandé qui peut être utilisé pour la fixation de manchons dans des tubes de générateur de vapeur et qui comporte une tête de soudage rigide fixée à l'extrémité d'un conduit souple dans lequel passent les moyens d'alimentation de la tête de soudage et par l'intermédiaire duquel la mise en place de la tête de soudage au niveau d'un tube quelconque du faisceau peut être effectuée. Cet ensemble de soudage utilise un dispositif porteur de type connu fixé sous la plaque tubulaire et qui permet de supporter et de mettre en place au niveau d'un tube quelconque du faisceau l'extrémité d'un conduit de guidage flexible dans lequel se déplace la tête de soudage et son conduit flexible de liaison.

Sur le dispositif porteur, sont également fixés un moyen permettant de déplacer la tête de soudage à l'intérieur d'un tube de générateur de vapeur et de la mettre en place dans une position parfaitement déterminée à l'intérieur du tube ainsi qu'un ensemble de paliers et de moyens moteurs permettant de mettre la tête de soudage en rotation à l'intérieur du tube.

L'utilisation d'un tel dispositif est limitée, puisque la tête de soudage rigide doit rester constamment engagée dans des paliers et des moyens moteurs portés par le dispositif porteur situé sous la plaque tubulaire.

La longueur de la tête de soudage rigide doit être limitée à une valeur relativement faible, surtout lorsqu'on désire pouvoir réaliser les interventions dans les tubes situés à la périphérie du faisceau.

Il n'est donc pas possible d'effectuer des soudages à une hauteur importante à l'intérieur du tube.

L'ensemble de soudage selon l'art antérieur n'est en fait utilisable que pour réaliser des soudages à l'intérieur de la plaque tubulaire ou, au mieux, au voisinage de sa face de sortie.

Le but de l'invention est donc de proposer un dispositif de soudage rotatif à l'intérieur d'un tube de petit diamètre, en particulier à l'intérieur d'un tube de générateur de vapeur serti à l'une de ses extrémités dans une plaque tubulaire de forte épaisseur, constitué par une tête de soudage par procédé TIG d'un diamètre inférieur au diamètre intérieur du tube comportant un support sur lequel sont fixées une pièce de guidage et une électrode de direction radiale, fixé à l'extrémité d'un conduit flexible suivant la longueur duquel sont disposés des moyens d'alimentation de la tête de soudage en électricité, en eau de refroidissement et en gaz inerte et par des moyens moteurs de déplacement de la tête de soudage en translation axiale dans le tube et en rotation autour de l'axe du tube, ce dispositif permettant de réaliser des soudages à une hauteur quelconque dans le tube du générateur de vapeur, dans des zones éloignées de la plaque tubulaire et, éventuellement, au niveau des différentes entretoises de maintien du faisceau, disposées en des emplacements régulièrement espacés suivant la hauteur du faisceau.

Dans ce but, le moyen moteur pour la mise en rotation de la tête de soudage est disposé dans un boîtier moteur intercalé entre deux sections du conduit flexible, l'une de ces sections reliant le boîtier à une douille dans laquelle la tête de soudage est montée rotative et comportant un élément flexible de transmission du mouvement de rotation entre le moyen moteur et la tête de soudage et l'autre section étant reliée, à l'une de ses extrémités, au boîtier moteur et en prise avec un dispositif tireur-pousseur pour le déplacement du flexible et par son intermédiaire de la tête de soudage et du boîtier moteur.

Afin de bien faire comprendre l'invention, on va maintenant décrire à titre d'exemple un mode de réalisation d'un dispositif de soudage orbital suivant l'invention utilisable pour réaliser des soudages à une hauteur quelconque dans un tube de générateur de vapeur d'un réacteur nucléaire à eau sous pression.

La figure 1 est une vue de l'ensemble du dispositif de soudage en position de travail dans un générateur de vapeur d'un réacteur nucléaire à eau sous pression.

La figure 2 est une vue latérale de l'ensemble de la canne de soudage du dispositif représenté sur la figure 1.

La figure 3 est une vue en coupe suivant 3-3 de la figure 2 de la tête de soudage du dispositif.

La figure 4 est une vue en coupe suivant 4-4 de la figure 2, du boîtier moteur du dispositif.

La figure 5 est une vue en coupe suivant 5-5 de la figure 2.

La figure 6 est une vue en élévation de la canne de soudage en position à la verticale d'un tube de générateur de vapeur, avant l'introduction de la tête de soudage dans ce tube.

La figure 7 est une vue en élévation avec coupe partielle de la canne de soudage en position de travail, la tête de soudage étant introduite dans le tube.

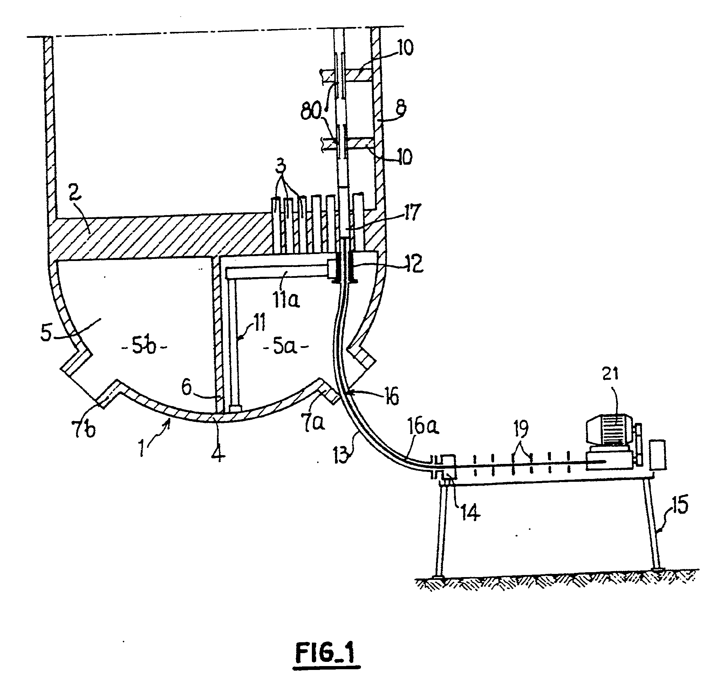

Sur la figure 1, on a représenté de façon schématique l'ensemble du dispositif de soudage en position de travail dans un générateur de vapeur dont on a représenté la partie inférieure 1.

Le générateur de vapeur comporte une plaque tubulaire 2 de forte épaisseur dans laquelle sont fixées les extrémités inférieures des tubes 3 du faisceau d'échange du générateur de vapeur. En dessous de la plaque tubulaire 2, le générateur de vapeur comporte un fond bombé délimitant une boîte à eau en deux parties 5a et 5b séparées par une cloison 6. Chacune des parties 5a et 5b de la boîte à eau 5 comporte une ouverture de visite ou trou d'homme correspondante 7a, 7b.

La réparation des tubes 3 du faisceau nécessitant, pour chacun des tubes, une opération de soudage orbital d'un manchon à l'intérieur du tube 3 est effectuée au moment d'un arrêt du réacteur, la boîte à eau 5 et les tubes 3 ne renfermant plus d'eau primaire.

Au-dessus de la plaque tubulaire 2, l'enveloppe 8 du générateur de vapeur délimite un volume dans lequel de l'eau d'alimentation est échauffée et vaporisée au contact de la surface extérieure des tubes 3. Dans cette partie du générateur de vapeur délimitée par l'enveloppe 8 et contenant le faisceau, les tubes sont maintenus à intervalles réguliers suivant la hauteur du générateur de vapeur, par des plaques entretoises 10.

Le dispositif suivant l'invention permet d'effectuer le soudage d'un manchon dans un tube 3 du faisceau à une hauteur quelconque et, en particulier, au niveau d'une plaque entretoise 10 située à un niveau quelconque suivant la hauteur du faisceau.

La mise en place de l'ensemble de soudage suivant l'invention dans un tube 3 quelconque du faisceau nécessite la mise en oeuvre d'un dispositif porteur 11 d'un type connu qui est introduit dans le compartiment correspondant (ici 5a) de la boîte à eau du générateur de vapeur, pendant les opérations d'entretien et de réparation du générateur de vapeur. Ce dispositif porteur 11 d'un type connu peut être fixé sur la plaque tubulaire 2 et comporte un bras 11a dont l'extrémité peut être placée successivement à la verticale de chacune des extrémités des tubes 3 débouchant dans le compartiment 5a de la boîte à eau. Cette extrémité du bras 11a porte un tube guide rigide 12 et l'extrémité d'un tube guide flexible 13 raccordé au tube 12.

L'extrémité du tube 13 opposée au porteur 11 est reliée, à l'extérieur de la boîte à eau, à la sortie 14 d'une machine de transfert 15 permettant d'assurer le déplacement dans le tube 13 d'une canne de soudage 16 comportant un conduit flexible 16a de grande longueur à l'extrémité duquel est fixée la tête de soudage 17.

Le conduit de guidage 13 pénètre dans la boîte à eau par le trou d'homme 7a.

La machine de transfert 15 comporte un moteur 21 permettant d'assurer la translation dans un sens ou dans l'autre du conduit flexible 16a, les éléments 19, reliés entre eux par des chainettes, assurant le centrage du flexible pendant ces mouvements. Le déplacement en translation du conduit flexible 16a à l'intérieur du conduit de guidage 13 permet d'assurer la mise en place de la tête de soudage 17 sous la plaque tubulaire 2, à la verticale d'un tube 3 dans lequel on réalise le soudage, puis le déplacement de cette tête de soudage dans le tube 3, comme il sera décrit plus loin.

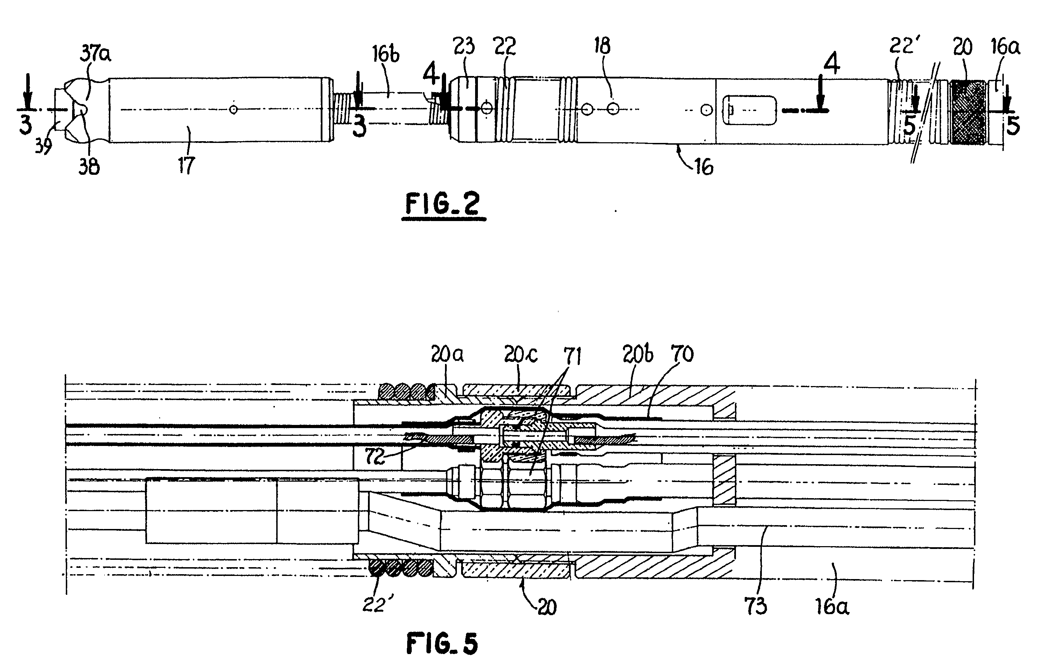

Sur la figure 2, on voit la canne de soudage 16 comportant un conduit flexible en deux parties 16a, 16b et une tête de soudage 17 fixée à l'extrémité de la partie 16b du conduit flexible.

La canne de soudage comporte, entre les sections successives 16a et 16b du conduit, un boîtier moteur 18 relié aux sections 16a et 16b du conduit flexible, respectivement, par l'intermédiaire de tronçons flexibles de raccordement 22 et 22' et de pièces de jonction 20 et 23, respectivement.

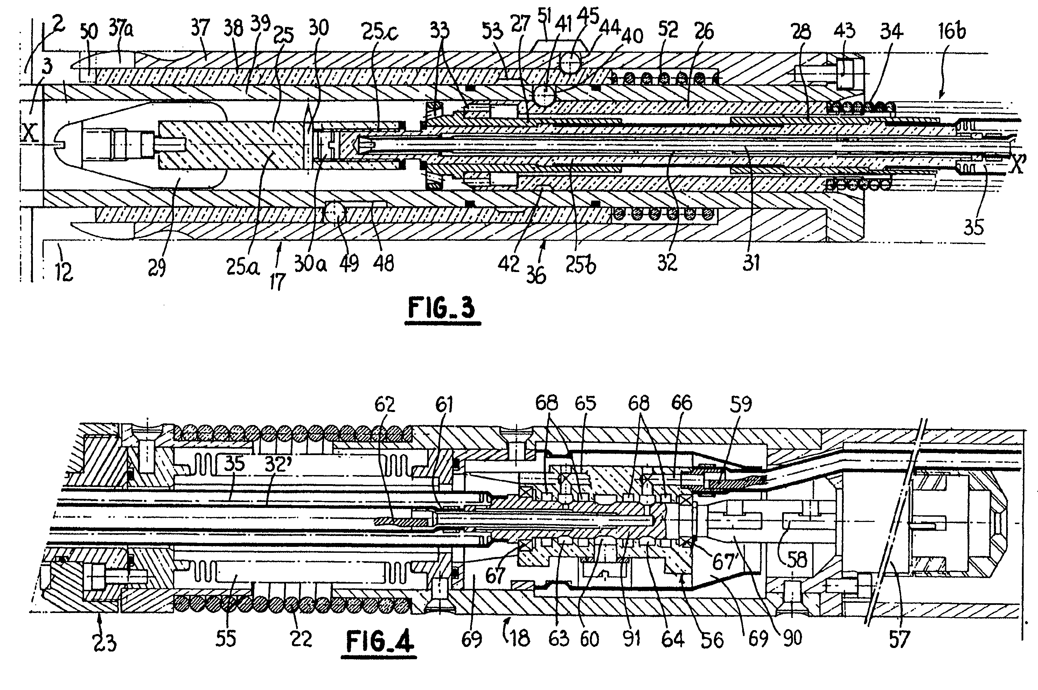

On va maintenant se reporter aux figures 3, 4 et 5 pour décrire les différentes parties de la canne de soudage 16.

Sur la figure 3, on voit la tête de soudage 17 comportant un support 25 monté rotatif autour de l'axe XX' de la canne de soudage, à l'intérieur d'une douille 26, par l'intermédiaire de paliers lisses 27 et 28 solidaires du support 25.

Le support 25 est réalisé en deux parties 25a et 25b assemblées l'une à l'autre par l'intermédiaire de parties filetées correspondantes 25c.

La partie antérieure 25a du support porte à son extrémité une olive de guidage 29 de forme profilée dot le diamètre maximal est légèrement inférieur au diamètre intérieur des tubes 3 du générateur de vapeur. Le support 25a porte également l'électrode de soudage 30 disposée de façon radiale par rapport à l'axe XX' de la canne. L'électrode 30 est introduite dans un logement radial du support 25 et maintenue en place par une vis 30a engagée dans le filetage 25c. L'électrode est ainsi démontable et son extrémité de forme conique peut être placée dans une position très précise dans la direction radiale. La distance entre la pointe de l'électrode 30 et le tube, lorsque la tête de soudage est introduite dans un tube 3 du générateur de vapeur, peut donc être réglée à une valeur extrêmement précise.

La partie 25b du support 25 est réalisée sous forme tubulaire et comporte à sa partie centrale un canal borgne 31 dont l'extrémité est située au niveau des parties de raccordement entre les pièces 25a et 25b et dans lequel est placé un tube central 32 d'axe XX' permettant d'assurer l'alimentation électrique de l'électrode et son refroidissement par eau, comme il sera expliqué plus loin.

Le support 25 et la douille 26 définissent un ensemble de canaux 33 pour le passage du gaz inerte de balayage de la zone de soudage.

La tête de soudage 17 est reliée à la partie 16b du conduit flexible, à son extrémité postérieure, par l'intermédiaire de la douille 26 et par l'intermédiaire de la partie 25b du support 25, respectivement. La douille 26 est reliée à un conduit 34 constitué par un enroulement hélicoïdal de fils à spires jointives. La partie 25b du support 25 est reliée à un conduit 35 constitué par un tube dont la paroi présente des ondes de direction radiale successives. Les conduits 34 et 35 réalisés sous forme flexible et disposés de façon coaxiale constituent la section 16b du conduit flexible de la canne de soudage.

Le conduit 34 délimite avec le conduit 35 un espace annulaire de passage du gaz inerte de balayage de la zone de soudage.

A l'intérieur du conduit 35 sont assurées à la fois l'alimentation électrique et l'alimentation en eau de refroidissement de la tête de soudage, comme il sera expliqué plus loin.

Le support 25 de la tête de soudage et la douille 26 sont disposés à l'intérieur d'un manchon de protection 36 constitué de trois manchettes coaxiales 37, 38 et 39, la douille 26 étant montée à glissement dans l'alésage intérieur de la manchette intérieure 39.

La manchette 39 comporte un logement 40 traversant sa paroi dans lequel est engagée une bille de blocage 41. La douille 26 comporte une gorge 42 dans sa surface extérieure, dans laquelle vient s'engager la bille de blocage 41.

Pendant son transfert dans le conduit de guidage 13 et dans le tube guide 12, la tête de soudage 17 est disposée à l'intérieur du manchon de protection 36 comme représenté sur la figure 3.

Les manchettes 37 et 39 sont maintenues solidaires l'une de l'autre par des vis telles que 43 engagées dans leurs extrémités postérieures. Ces deux manchettes 37 et 39 délimitent entre elles un espace annulaire dans lequel la manchette 38 est montée coulissante. La manchette 37 est percée d'une ouverture 44 servant de logement pour une bille de blocage 45 qui est normalement engagée dans une ouverture prévue dans la manchette coulissante 38. La manchette 39 comporte également une rainure 48 dans laquelle est engagée une bille de guidage 49 disposée dans un logement traversant la manchette intermédiaire coulissante 38.

Pendant les déplacements de la tête de soudage 17 à l'intérieur du tube de guidage flexible 13, l'ensemble de manchettes 37, 38, 39 et la douille 26 sont maintenues verrouillées dans la direction axiale par les billes de verrouillage 41 et 45.

Lorsque la tête de soudage 17 est engagée dans le tube guide 12 comme représenté sur la figure 3, l'extrémité de la manchette coulissante intermédiaire 38 vient en butée sur un ergot 50 solidaire du conduit 12 et saillant vers l'intérieur. Cette mise en butée est réalisée au moment où la manchette intérieure 39 est à une distance très faible de la face d'entrée de la plaque tubulaire 2, cette manchette 39 étant en appui sur la plaque tubulaire ou sur l'extrémité du tube 3 légèrement saillante par rapport à la face d'entrée de la plaque tubulaire 2. L'ergot 50 est disposé dans le conduit 12, de façon à pouvoir passer entre les deux parties de l'extrémité profilée 37a de la manchette 37, ces deux parties étant visibles sur la figure 2.

L'extrémité profilée 37a de la manchette 37 permet de faciliter le passage de la tête de soudage 17 dans le tube de guidage flexible et l'introduction dans le tube guide 12, tout en assurant un très bon guidage.

Lorsque le manchon de protection 36 est venu en butée sur l'ergot 50 par l'intermédiaire de la manchette 38, la bille de blocage 45 se trouve au niveau d'une échancrure 51 usinée dans la surface intérieure du tube guide 12.

Si l'on continue à exercer une poussée sur la tête de soudage, la bille 45 s'efface vers l'extérieur en pénétrant dans l'échancrure 51. Il peut alors se produire un déplacement relatif entre la manchette 38 et les manchettes 37 et 39, un ressort 52 intercalé entre la manchette 38 et la manchette 37 étant alors comprimé.

Lors de son recul, la manchette 38 vient présenter une échancrure 53 en face de la bille de blocage 41. Le bille de blocage 41 peut alors s'effacer vers l'extérieur en pénétrant dans l'échancrure 53. On réalise ainsi le déblocage de la tête de soudage proprement dite constituée par la douille 26 dans laquelle le support 25 est monté rotatif.

En continuant à exercer une poussée axiale sur cet ensemble, on assure son déplacement axial à l'intérieur du manchon de protection 36, puis à l'intérieur du tube 3 situé dans le prolongement de la manchette intérieure 39.

Le même dispositif permet, lorsqu'après soudage on redescend le support 35 et la douille 26 dans le manchon de protection 36, de réaliser le verrouillage de ce manchon sous l'action du ressort de rappel 52. La tête de soudage 17 peut alors être déplacée de nouveau à l'intérieur du flexible 13, à l'intérieur de son manchon de protection 36.

Sur la figure 4, on voit l'ensemble de raccordement mécanique 23 entre la section 16b du conduit flexible et le boîtier moteur 18. Cet ensemble mécanique 23 est constitué par un ensemble de bagues reliées entre elles par des liaisons vissées. Le conduit flexible 34 constitué par un enroulement hélicoïdal à spires jointives de section carrée est fixé à l'extrémité de l'une de ces bagues pour assurer la continuité de la liaison du conduit flexible 16b.

L'alésage interne des bagues 23 est traversé par le conduit souple 35, avec un certain jeu radial. Le conduit 35 est recouvert intérieurement et extérieurement par des gaines souples en matériau rétractable isolant et étanche. La gaine intérieure du conduit 35 constitue le conduit souple 32' disposé dans le prolongement du tube rigide 32. Un espace suffisant est maintenu entre la gaine 32' et la surface intérieure du conduit flexible 35, pour le passage de l'eau de refroidissement de la tête de soudage, en direction de cette tête de soudage. Le retour de l'eau de refroidissement s'effectue par l'intérieur de la gaine 32'.

Le tronçon 22 flexible assurant la liaison entre l'ensemble mécanique 23 et le boîtier 18 est relié d'une part à l'une des bagues de l'ensemble 23 et d'autre part à la partie antérieure du boîtier 18. A l'intérieur de ce tronçon flexible 22 selon l'axe duquel passe le conduit flexible 35, ce conduit 35 est isolé de l'extérieur par un soufflet 55. Le soufflet 55 est intercalé entre la face postérieure d'une des bague 23 et la face antérieure de fermeture du boîtier 18.

Le boîtier 18 renferme un palier collecteur 56 et un moteur 57 d'entraînement de la tête de soudage en rotation.

L'arbre de sortie 58 du moteur 57 est relié par un accouplement isolant 90 constituant la partie fixe du collecteur à la partie tournante 91 du collecteur disposée à l'intérieur du palier 56. A sa sortie du palier 56, la partie tournante 91 est reliée à l'extrémité du conduit souple 35. La rotation du moteur 57 peut ainsi être transmise au support 25 de la tête de soudage 17, par l'intermédiaire du conduit 35 qui est déformable en flexion mais rigide en rotation autour de l'axe XX'.

De plus, la partie tournante 91 du collecteur assure le transfert du courant électrique de soudage, entre une borne d'alimentation 59 et l'électrode 30, par l'intermédiaire d'un liquide conducteur remplissant l'espace annulaire 60 du collecteur 56, d'une pièce tubulaire 61 et d'un conducteur souple sous forme d'une tresse 62 de forte section disposé axialement à l'intérieur du conduit souple 32' isolant.

Le collecteur tournant 56 comporte également deux espaces annulaires 63 et 64 reliés respectivement à un conduit d'alimentation en eau de refroidissement 65 et un conduit de retour d'eau 66 transversant la partie fixe du palier collecteur 56. L'espace annulaire 63 communique, à la périphérie du tube 61, avec l'espace annulaire situé à la périphérie et à l'extérieur due conduit 32'. L'espace annulaire 64 communique avec l'espace intérieur du conduit 32', par l'intermédiaire d'un alésage central de la partie tournante 91 du collecteur et de l'alésage intérieur du tube 61. L'espace annulaire à la périphérie de la gaine 32' communique avec un espace annulaire situé entre le conduit 32 et l'alésage intérieur de la partie 25b du support 25. L'eau d'alimentation est ainsi amenée à la tête de soudage 17, au voisinage immédiat de l'électrode 30. Cette eau de refroidissement revient par l'intérieur des conduits 32 et 32' et du tube 61, au collecteur 56.

La partie tournante 91 est montée rotative dans la partie fixe du collecteur 56 par l'intermédiaire de deux paliers 67 et 67'. Quatre joints d'étanchéité 68 assurent la séparation et l'isolation des espaces annulaires 60, 63 et 64. La partie fixe du collecteur 56 est d'autre part percée axialement de façon à assurer la continuité du passage du gaz inerte de balayage vers l'espace intérieur du soufflet 55. L'ensemble du palier collecteur 56 est disposé à l'intérieur d'un ensemble isolant 69 qui assure son isolation électrique par rapport au boîtier 18.

Le moteur 57 et le collecteur tournant 56 disposés dans le boîtier moteur 18 assurent ainsi la mise en rotation ainsi que le guidage et le centrage de l'ensemble tournant dont la partie d'extrémité constitue la partie tournante de la tête de soudage 17. Cette partie d'extrémité tournante est maintenue parfaitement guidée et centrée par les paliers lisses 27 et 28.

La transmission du courant de soudage de forte intensité est assurée par la partie tournante 91, le conducteur 62 et le tube 32 disposés axialement dans le support 25b. Les paliers 27 et 28 intercalés entre la partie 25b du support et la douille 26 sont en un matériau isolant électrique, si bien que la douille 26 et la partie externe 34 du conduit flexible 16b sont isolées de l'alimentation électrique assurée par des éléments à disposition centrale.

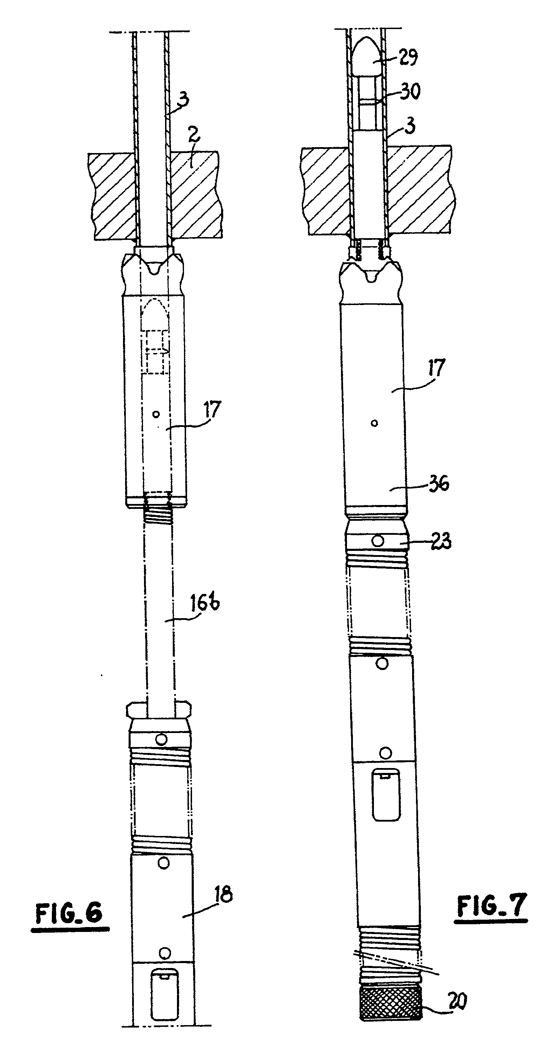

En se reportant à la figure 5, on voit l'ensemble mécanique 20 permettant de relier le tronçon flexible 22' à la section 16a de grande longueur de la canne de soudage 16. Cet ensemble mécanique comporte deux bagues filetées 20a et 20b reliées par un écrou 20c.

Le tronçon flexible 22' est relié à l'une de ses extrémités à l'extrémité postérieure du boîtier 18 renfermant le moteur 57 et à son autre extrémité à la bague antérieure 20a de l'ensemble mécanique 20. A l'intérieur de l'ensemble mécanique 20 sont disposés, à l'intérieur d'une gaine isolante 70, les raccords 71 des conduits d'alimentation et de retour d'eau et les raccords d'alimentation électriques de la tête de soudage. Les conducteurs électriques destinés à véhiculer le courant de soudage à très forte intensité sont constitués par des tresses 72 disposées à l'intérieur de gaines isolantes.

L'ensemble des alimentations en courant électrique, en eau de refroidissement ainsi que l'alimentation en gaz inerte de balayage 73 passent à l'intérieur du conduit flexible 16a qui est relié à son extrémité opposée à l'ensemble 20, à des installations d'alimentation fixes.

Le collecteur tournant 56 assure la jonction entre la partie tournante de la tête de soudage et des parties fixes en rotation reliées à l'intérieur du conduit 16a aux alimentations fixes.

On va maintenant se reporter à l'ensemble des figures et principalement aux figures 1, 6 et 7 pour décrire le fonctionnement du dispositif de soudage suivant l'invention.

L'ensemble du dispositif représenté sur la figure 1 ayant été mis en place, on assure, grâce au dispositif de déplacement en translation 21, 19, le déplacement de la canne de soudage 16 à l'extrémité de laquelle est fixée la tête de soudage 17, à l'intérieur du conduit 13, jusqu'au moment où la tête de soudage 17 pénètre dans le tube guide 12. Le manchon de protection 36 de la tête de soudage 17 vient alors en butée comme décrit précédemment et le déplacement en translation se poursuit par un déplacement de la tête de soudage proprement dite 25, 26 dans le manchon 36, puis dans le tube 3.

La figure 6 représente la partie supérieure de la canne de soudage 16 au moment de sa mise en butée dans le tube guide 12. Le déplacement vers le haut de la tête de soudage proprement dite se poursuit, soit jusqu'au moment où l'olive de guidage 29 vient en butée sur l'extrémité d'une manchette 80 disposée préalablement dans le tube 3 pour sa réparation, soit jusqu'au moment où la face antérieure de l'ensemble mécanique 23 vient en butée contre l'extrémité postérieure du manchon de protection 36 de la tête de soudage 17.

Si l'on désigne par 1 la longueur du conduit 16b entre les pièces 23 et 36, lorsque la tête de soudage est logée à l'intérieur du manchon 36, il est visible que la hauteur maximale de pénétration de l'électrode 30 dans le tube 3, c'est-à-dire la hauteur maximale d'intervention dans le tube pour un soudage, est sensiblement égale à 1, la position de l'électrode 30 étant très peu en retrait par rapport à l'orifice du tube 3 dans la phase initiale représentée sur la figure 6.

Il est donc possible de prévoir une longueur suffisante de la section 16b du conduit pour pouvoir travailler à l'intérieur du tube 3 à une hauteur quelconque et par exemple au niveau d'une plaque entretoise 10 située à un endroit quelconque dans le générateur de vapeur. Il est même possible de prévoir une longueur suffisante de la section 16b du conduit flexible pour effectuer un soudage au niveau de l'entretoise supérieure du générateur de vapeur.

Lorsque la tête de soudage est parvenue dans sa position de travail suivant la hauteur du tube, on arrête le dispositif de déplacement 21, 19 de la canne de soudage 16, ce dispositif n'assurant plus alors que le maintien en position de la canne de soudage dans le tube.

On assure alors les alimentations voulues en courant électrique du moteur 57 et de la tête de soudage ainsi que l'alimentation en eau et en gaz de balayage de cette tête de soudage. L'électrode 30 effectue un peu plus qu'un tour complet, le soudage étant effectué avec un certain recouvrement ; on assure ainsi le soudage de l'extrémité de la manchette 80 sur la surface intérieure du tube 3.

Le mouvement rotatif de l'électrode 30 est parfaitement guidé par le palier collecteur 56 et par les paliers lisses 27 et 28. La douille 26 assure en effet un centrage parfait de la tête de soudage dans le tube 3, le guidage en rotation étant assuré à la fois par l'olive 29 et par les paliers 27 et 28, pendant le déplacement en rotation de l'électrode 30.

Le mouvement de rotation est transmis sans torsion à l'électrode par le conduit flexible 35.

Il est donc possible d'effectuer un soudage dans le tube 3 à une hauteur quelconque, la motorisation de l'électrode pour son déplacement en rotation étant assurée par un boîtier solidaire de la canne de soudage et positionné pendant le soudage, au niveau de la plaque tubulaire.

D'autre part, la mise en place du dispositif dans les tubes périphériques du faisceau du générateur de vapeur peut être effectuée sans difficulté, la tête rigide 17 présentant une hauteur faible, par exemple de l'ordre de 25 cm. Le boîtier moteur 18 présente lui-même une hauteur faible et peut transmettre un couple en rotation avec un léger désalignement par rapport à la tête de soudage 17.

D'autre part, le couple est transmis à la tête de soudage en ligne droite ou avec un très faible désalignement, depuis une zone située au voisinage de la face d'entrée de la plaque tubulaire.

L'utilisation d'un palier collecteur disposé dans le boîtier moteur permet d'une part d'assurer la distribution du courant électrique et des fluides à la tête de soudage sans avoir d'organe tournant à l'intérieur de la seconde section de grande longueur du conduit flexible et d'autre part d'assurer la transmission de la rotation à la tête de soudage, dans de très bonnes conditions.

Enfin, l'invention s'applique non seulement à la réparation par manchonnage des tubes d'un générateur de vapeur mais encore à toute opération de soudage orbital à l'intérieur d'un tube de petit diamètre, par exemple d'un tube dont le diamètre intérieur est compris entre 15 et 25 mm.

## Revendications

1. Dispositif de soudage rotatif pour souder à l'intérieur d'un tube (3) de petit diamètre, en particulier à l'intérieur d'un tube de générateur de vapeur serti à l'une de ses extrémités dans une plaque tubulaire (2) de forte épaisseur, constitué par une tête de soudage (17) par procédé TIG d'un diamètre inférieur au diamètre intérieur du tube comportant un support (25) sur lequel sont fixées une pièce de guidage (29) et une électrode (30) de direction radiale, fixé à l'extrémité d'un conduit flexible (16) suivant la longueur duquel sont disposés des moyens (62, 35, 32', 73) d'alimentation de la tête de soudage (17) en électricité, en eau de refroidissement et en gaz inerte et par des moyens moteurs de déplacement (18, 21, 19, 57) de la tête de soudage en translation axiale dans le tube (3) et en rotation autour de l'axe du tube, caractérisé par le fait que le moyen moteur (57) pour la mise en rotation de la tête de soudage est disposé dans un boîtier moteur (18) intercalé entre deux sections (16a, 16b) du conduit flexible (16), l'une de ces sections (16b) reliant le boîtier à une douille (26) dans laquelle le support (25) de la tête de soudage est monté rotatif et comportant un élément flexible (35) de transmission du mouvement de rotation entre le moyen moteur (57) et le support (25) de la tête de soudage et l'autre section (16a) étant reliée, à l'une de ses extrémités au boîtier moteur (18) et en prise avec un dispositif tireur-pousseur (21) pour le déplacement du conduit flexible (16a) et par son intermédiaire de la tête de soudage (17) et du boîtier moteur (18).

2. Dispositif de soudage suivant la revendication 1, caractérisé par le fait qu'à l'intérieur du boîtier moteur (18) est disposé un palier collecteur (56) dont la partie tournante (91) est reliée à un arbre de sortie (58 du moyen moteur (57) et dont la partie fixe en rotation comporte des conduits (65) 66) et des chambres annulaires (60, 63, 64) disposés autour de la partie tournante (91), pour la transmission de courant électrique permettant le soudage et de fluides a la tête de soudage (17).

3. Dispositif de soudage suivant la revendication 2, caractérisé par le fait que la partie fixe en rotation du palier collecteur (56) comporte au moins deux chambres annulaires (63, 64) dont l'une est reliée à un conduit d'arrivée d'eau de refroidissement (65) et l'autre à un conduit de retour d'eau de refroidissement (66).

4. Dispositif de soudage suivant l'une quelconque des revendications 2 et 3, caractérisé par le fait que la partie fixe en rotation du palier collecteur (56) comporte au moins une chambre annulaire (60) remplie d'un liquide conducteur et disposée autour de la partie tournante (91), pour la transmission de courant électrique à cette partie (91).

5. Dispositif de soudage suivant l'une quelconque des revendications 1 à 4, caractérisé par le fait que l'élément flexible (35) de transmission du mouvement de rotation entre le moyen moteur (57) et le support (25) de la tête de soudage est constitué par un tube dont la paroi comporte des ondes successives de direction radiale.

6. Dispositif de soudage suivant la revendication 5, caractérisé par le fait qu'un gaine étanche et isolante (32') est disposée à l'intérieur du tube (35) et suivant sa direction axiale, pour permettre le passage d'eau de refroidissement dans son alésage interne et dans l'espace annulaire entre sa paroi externe et le tube (35).

7. Dispositif de soudage suivant la revendication 6, caractérisé par le fait qu'un conducteur électrique souples (62) est disposé à l'intérieur de la gaine (32') suivant sa direction axiale, pour la transmission du courant de soudage depuis le boîtier moteur (18) jusqu'à la tête de soudage (17).

8. Dispositif de soudage suivant l'une quelconque des revendications 1 à 7, caractérisé par le fait que la douille (26) fixée à l'extrémité du conduit (16b) dans laquelle le support (25) de la tête de soudage (17) est monté rotatif, est disposée dans un manchon de protection amovible (36) dont le diamètre extérieur est supérieur au diamètre intérieur du tube (3).

9. Dispositif de soudage suivant la revendication 8, caractérisé par le fait que le manchon de protection (36) comporte deux manchettes coaxiales (37, 39) solidaires et délimitant entre elles un espace annulaire dans lequel une manchette (38) est montée coulissante dans la direction axiale, que la manchette intérieure (39) comporte un logement (40) pour une bille (41) de blocage axial de la douille (26) à l'intérieur du manchon (36), que la manchette coulissante (38) comporte une échancrure (53) dans laquelle la bille (41) est susceptible de venir en position de déverrouillage lorsque la manchette (38) est déplacée axialement par rapport aux manchette (37 et 39) et qu'un ressort de rappel (52) de la manchette (38) en position de verrouillage de la douille (26) est intercalé entre la manchette (38) et les manchettes (37 et 39) solidaires l'une de l'autre.

10. Dispositif de soudage suivant l'une quelconque des revendications 1 à 9, dans le cas où le tube (3) est un tube de générateur de vapeur d'un réacteur nucléaire à eau pressurisée dont une extrémité est sertie dans une plaque tubulaire (2) ayant une face d'entrée située à l'intérieur d'une boîte à eau (5), caractérisé par le fait qu'il comporte un conduit de guidage flexible (13) joignant les moyens (21, 19) de déplacement de la tête de soudage (17) en translation à un dispositif porteur (11, 11a) situé à l'intérieur de la boîte à eau (5), au voisinage de l'entrée du tube (3).

11. Dispositif de soudage suivant la revendication 10, caractérisé par le fait que la longueur de la section (16b) du conduit flexible joignant la tête de soudage (17) au boîtier moteur (18) est sensiblement égale à la distance entre l'entrée du tube et la zone dans laquelle on effectue le soudage, le boîtier (18) étant au voisinage de la face d'entrée de la plaque tubulaire pendant le soudage.

12. Dispositif de soudage suivant la revendication 11, caractérisé par le fait que la longueur de la section (16b) du conduit flexible (16) est sensiblement égale à la longueur de la branche droite du tube de générateur de vapeur.

**Patentansprüche**

1. Rotationsschweißvorrichtung zum Schweißen in einem Rohr (3) mit kleinem Durchmesser, besonders in einem Dampferzeugerrohr, wobei ein Rohrende in eine relativ dicke Rohrwand (2) eingefalzt ist, bestehend aus einem Schweißkopf (17) nach TIG-Verfahren, dessen Durchmesser kleiner ist als der Innendurchmesser des zu schweißenden Rohres, mit einer Stützvorrichtung (25), auf die ein Führungselement (29) und eine Radialelektrode (30) montiert sind, aufgesetzt auf ein flexibles Rohr (16), dessen Länge die Anordnung der Strom-, Kühlwasser- und Schutzgasversorgungsgeräte (62, 35, 32', 73) des Schweißkopfes (17) bestimmt. Durch Motorantrieb (18, 21, 19, 57) bewegt sich der Schweißkopf in Axialverschiebung im Rohr (3) und in Drehbewegung um die Rohrachse ; dadurch gekennzeichnet, daß das Antriebsmittel (57) für die rotationsbewegung des Schweißkopfes in ein zwischen zwei Rohrsegmente (16a, 16b) zwischengeschaltetes Motorgehäuse montiert ist, wobei eins dieser Segmente (16b) das Gehäuse mit einer Hülse (26) verbindet, in die die Stützvorrichtung (25) des Schweißkopfes durch Drehbewegung montiert ist und die mit einem flexiblen Element (35) für die Übertragung der Rotationsbewegung zwischen dem Antriebsmittel (57) und der Stützvorrichtung (25) des Schweißkopfes ausgestattet ist, wobei das andere Segment (16a) mit einem seiner Enden an das Motorgehäuse (18) angeschlossen und an eine Zieh- und Schubvorrichtung (21) für die Bewegung des flexiblen Rohrs (16a) und, mit seiner Hilfe, des Schweißkopfes (17) und des Motorgehäuses (18) angebunden ist.

2. Schweißvorrichtung nach Anspruch 1, dadurch gekennzeichnet, daß im Innern des Motorgehäuses (18) ein Sammellager (56) montiert ist, dessen drehbares Teil (91) an eine Antriebswelle (58) des Antriebsmittels (57) angeschlossen ist und dessen feststehendes sich drehendes Teil mit Leitungen (65) (66) und Wirbelkammern (60, 63, 64) ausgestattet ist, die um das drehbare Teil (91) herum angelegt sind und der Übertragung von Strom zum Schweißen und von Fluiden zum Schweißkopf (17) dienen.

3. Schweißvorrichtung nach Anspruch 2, dadurch gekennzeichnet, daß das feststehende Rotationsteil des Sammellagers (56) mindestens zwei Wirbelkammern (63, 64) enthält, wobei eine dieser Kammern an eine Kühlwasserzufuhrleitung (65) und die andere an eine Kühlwasserabfuhrleitung (66) angeschlossen ist.

4. Schweißvorrichtung nach einem der Ansprüche 2 und 3, dadurch gekennzeichnet, daß das feststehende Rotationsteil des Sammellagers (56) mindestens eine Wirbelkammer (60) enthält, die mit einer leitfähigen Flüssigkeit gefüllt und um das drehende Teil (91) herum angelegt ist, für die Stromübertragung auf eben dieses Teil (91).

5. Schweißvorrichtung nach einem der Ansprüche 1 bis 4, dadurch gekennzeichnet, daß das flexible Element (35) für die Übertragung der Drehbewegung zwischen dem Antriebsmittel (57) und der Stützvorrichtung (25) des Schweißkopfes Radialwellen aufweist.

6. Schweißvorrichtung nach Anspruch 5, dadurch gekennzeichnet, daß das Rohr (35) innen und entsprechend seiner Axialrichtung mit einem Feuchtigkeits- und Isoliermantel (32') ausgestattet ist, um den Kühlwasserdurchfluß in seinem Innendurchmesser und in der Wirbelzone zwischen der Außenwand und dem Rohr (35) zu ermöglichen.

7. Schweißvorrichtung nach Anspruch 6, dadurch gekennzeichnet, daß ein Drahtlitzenleiter (62) im Innern des Isoliermantels (32') entsprechend seiner Axialrichtung angelegt ist, für die Stromübertragung zum Schweißen vom Motorgehäuse (18) bis zum Schweißkopf (17).

8. Schweißvorrichtung nach einem der Ansprüche 1-7, dadurch gekennzeichnet, daß die auf dem Segmentende (16b) angebrachte Hülse (26), in die die Stützvorrichtung (25) des Schweißkopfes (17) drehend montiert ist, in ein abnehmbares Futterrohr (36) montiert ist, dessen Außendurchmesser größer ist als der Innendurchmesser des Rohres (3).

9. Schweißvorrichtung nach Anspruch 8, dadurch gekennzeichnet, daß das Futterrohr (36) zwei fest miteinander verbundene Koaxialhülsen enthält (37, 39), zwischen denen sich sich eine Wirbelzone befindet, in die eine in Axialrichtung verschiebbare Hülse (38) eingebaut ist, daß die Innenhülse (39) einen Sitz (40) für eine Kugel (41) zur Axialsperrung der Hülse (26) im Innern des Futterrohrs aufweist, daß die verschiebbare Hülse (38) mit einer halbmondförmigen Aussparung (53) für den Empfang der Kugel in freigegebener Position versehen ist, wenn sich die Hülse (38) axial im Verhältnis zu den Hülsen (37 und 39) verschiebt und wenn sich eine Spannfeder (52) der verschiebbaren Hülse (38) in verriegelter Position der Hülse (26) zwischen der verschiebbaren Hülse (38) und den Hülsen (37 und 39) befindet, die fest miteinander verbunden sind.

10. Schweißvorrichtung nach einem der Ansprüche 1 bis 9, sofern das Rohr (3) ein Dampferzeugerrohr eines Druckwasserkernreaktors ist, wobei ein Ende in eine Rohrwand (2) eingefalzt ist, deren Einlaßfläche sich innerhalb eines Wasserkastens (5) befindet, dadurch gekennzeichnet, daß sie eine flexible Führungsleitung (13) enthält, die die sich in Translationsbewegung befindlichen Antriebsmittel (21, 19) des Schweißkopfes (17) an eine Tragvorrichtung (11, 11a) anschließt, die sich im Wasserkasten (5), neben dem Rohreinlauf (3), befindet.

11. Schweißvorrichtung nach Anspruch 10, dadurch gekennzeichnet, daß die Segmentlänge (16b) des flexiblen Rohrs, das den Schweißkopf (17) mit dem Motorgehäuse (18) verbindet, weitgehend dem Abstand zwischen dem Rohreinlauf und der Schweißzone entspricht, wobei sich das Gehäuse (18) während des Schweißens in unmittelbarer Nähe der Einlaßfläche der Rohrwand befindet.

12. Schweißvorrichtung nach Anspruch 11, dadurch gekennzeichnet, daß die Segmentlänge (16b) des flexiblen Rohrs (16) weitgehend mit der Länge des rechten Arms des Dampferzeugerrohrs übereinstimmt.

**Claims**

1. A rotary welding device for welding inside a tube (3) of small diameter, in particular inside a steam generator tube crimped at one of its ends into a tube plate (2) of great thickness, comprising a T.I.G. welding head (17) with a diameter smaller than the internal diameter of the tube, having a carrier (25) on which a guiding member (29) and a radially directed electrode (30) are mounted, said welding head being secured to the end of a flexible conduit (16), over the length of which there are disposed means (62, 35, 32', 73) for supplying the welding head (17) with electricity, cooling water and inert gas, and drive means for moving (18, 21, 19, 57) the welding head in axial translation in the tube (3) and in rotation about the tube axis, characterised in that the drive means (57) for rotating the welding head is arranged in a motor casing (18) inserted between two sections (16a, 16b) of the flexible tubing (16), one of said sections (16b) connecting the casing to a bush (26) in which the carrier (25) of the welding head is rotatably mounted and comprising a flexible member (35) for transmitting rotational motion between the drive means (57) and the carrier (25) of the welding head and the other section (16a) being connected at one of its ends to the motor casing (18) and in engagement with a puller-pusher device (21) for moving the flexible tubing (16a) and thereby the welding head (17) and the motor casing (18).

2. A welding device according to Claim 1, characterised in that inside the motor casing (18) there is arranged a collector bearing (56) whose rotating part (91) is connected to an output shaft (58) of the drive means (57) and whose part which is fixed in rotation comprises conduits (65, 66) and annular chambers (60, 63, 64) which are arranged around the rotating part (91), for transmitting electrical current permitting the welding and carrying fluids to the welding head (17).

3. A welding device according to Claim 2, characterised in that the part which is fixed in rotation of the collector bearing (56) comprises at least two annular chambers (63, 64) one of which is connected to a cooling water delivery conduit (65) and the other to a cooling water return conduit (66).

4. A welding device according to either of Claims 2 and 3, characterised in that the part which is fixed in rotation of the collector bearing (56) comprises at least one annular chamber (60) filled with a conductive liquid and arranged around the rotating part (91), for transmitting electrical current to said part (91).

5. A welding device according to any one of Claims 1 to 4, characterised in that the flexible member (35) for transmitting rotational motion between the drive means (57) and the carrier (25) of the welding head comprises a tube whose wall has a succession of undulations in radial direction.

6. A welding device according to Claim 5, characterised in that a leakproof and insulating sheath (32') is arranged inside the tube (35) and along its axial direction, to permit the flow of cooling water in its inner bore and in the annular space between its outer wall and the tube (35).

7. A welding device according to Claim 6, characterised in that a flexible electrical conductor (62) is arranged inside the sheath (32') along its axial direction, for transmitting the welding current from the motor casing (18) to the welding head (17).

8. A welding device according to any one of Claims 1 to 7, characterised in that the bush (26) mounted on the end of the tubing (16b) in which the support (25) of the welding . d (17) is rotatably mounted, is arranged in a . novable protective sleeve (36) whose outer diameter is greater than the internal diameter of the tube (3).

9. A welding device according to Claim 8, characterised in that the protective sleeve (36) has two integral coaxial collars (37, 39) defining between them an annular space in which a collar (38) is mounted so as to slide in the axial direction, that the inner collar (39) has a cavity (40) for a ball (41) for axially locking the bush (26) inside the sleeve (36), that the sliding collar (38) has a recess (53) which the ball (41) can enter in the release position when the collar (38) is moved axially relative to the collars (37 and 39) and that a spring (52) for returning the collar (38) into the locked position of the bush (26) is inserted between the collar (38) and the collars (37 and 39) which are integral with one another.

10. A welding device according to any one of Claims 1 to 9, in the case where the tube (3) is a steam generator tube of a pressurised water nuclear reactor, one end of which is crimped into a tube plate (2) which has an entry face situated inside a waterbox (5), characterised in that it comprises a flexible guide tubing (13) connecting the means (21, 19) for moving the welding head (17) in translation to a carrier device (11, 11a) situated inside the waterbox (5) in the vicinity of the tube (3) inlet.

11. A welding device according to Claim 10, characterised in that the length of the section (16b) of the flexible tubing connecting the welding head (17) to the motor casing (18) is substantially equal to the distance between the tube inlet and the region in which the welding is performed, the casing (18) being in the vicinity of the entry face of the tube plate during the welding operation.

12. A welding device according to Claim 11, characterised in that the length of the section (16b) of the flexible tubing (16) is substantially equal to the length of the straight section of the steam generator tube.

**FIG.1**

FIG. 2

FIG. 5

EP 0 298 841 B1

FIG. 3

FIG. 4

FIG. 6

FIG. 7

14